# FASCICULE DE BREVET EUROPEEN

(11) **EP 3 594 870 B1**
(45) Date de publication et mention de la délivrance du brevet: **15.06.2022**
(21) Numéro de dépôt: 19185818.2
(22) Date de dépôt: 11.07.2019
(51) Int. Cl.: G06Q 10/04, G01C 21/00, G05D 1/00, G06Q 50/30, G01C 21/20, G08G 5/00

(54) **SYSTÈME DE CALCUL DE MISSION D'UN AÉRONEF PAR COMBINAISON D'ALGORITHMES ET PROCÉDÉ ASSOCIÉ**
BERECHNUNGSSYSTEM DER MISSION EINES LUFTFAHRZEUGS DURCH ALGORITHMENKOMBINATION UND ENTSPRECHENDES VERFAHREN
SYSTEM FOR CALCULATING A MISSION OF AN AIRCRAFT BY A COMBINATION OF ALGORITHMS AND ASSOCIATED METHOD

(30) Priorité: 11.07.2018 FR 1800734
(43) Date de publication de la demande: 15.01.2020
(73) Titulaire: Dassault Aviation, 75008 Paris (FR)
(72) Inventeur: GRIMALD, Cyrille, 92214 SAINT CLOUD (FR); URIEN, Benoit, 92214 SAINT CLOUD (FR)
(74) Mandataire: Lavoix

(56) Documents cités:
- EP-A1- 0 892 962
- EP-B1- 0 892 962
- WO-A1-99/17080
- FR-A1- 2 918 471
- FR-A1- 3 031 806
- FR-A1- 3 032 271
- FR-A1- 3 056 778
- Raghuveer Devulapalli: "An Efficient Algorithm for Commercial Aircraft Trajectory Optimization in the Air Traffic System", , 1 janvier 2012 (2012-01-01), XP055557708, ISBN: 978-1-267-63696-6 Extrait de l'Internet: URL:https://conservancy.umn.edu/bitstream/ handle/11299/140007/Devulapalli_umn_0130M_ 12966.pdf;sequence=1 [extrait le 2019-02-15]
- Zvi Shiller: "Off-Line and On-Line Trajectory Planning" In: "Mechanisms, Transmissions and Applications", 1 janvier 2015 (2015-01-01), Erwin-Christian Lovasz, Burkhard Corves, Dordrecht, Netherlands, XP055557718, ISSN: 2211-0984 ISBN: 978-94-007-2726-7 vol. 29, pages 29-62, DOI: 10.1007/978-3-319-14705-5_2, * abrégé * * chapter 3 *

## Description

La présente invention concerne un système de calcul de mission d'un aéronef, selon le préambule de la revendication 1.

WO 99/17080 décrit un système de calcul de mission d'aéronef comportant un moteur de calcul propre à déterminer une trajectoire optimisée en utilisant un réseau de points de passage et de trajectoires imposées entre les points de passage basé sur la théorie des graphes.

Un tel système de calcul est notamment destiné à être intégré dans un cockpit, en parallèle d'un système de conduite de vol (« Flight Management System » ou « FMS » en anglais), pour permettre à l'équipage de déterminer des trajectoires de mission.

En variante, le système de calcul est propre à être intégré dans un système de planification de mission non embarqué, par exemple dans une infrastructure aéroportuaire d'établissement de trajectoire d'aéronef, dans un bagage de vol électronique (« Electronic Flight Bag » ou « EFB »), et/ou dans un dispositif électronique portable (par exemple une tablette), ou dans un ordinateur de type PC.

Le système de calcul est adapté pour déterminer au moins une route de l'aéronef sur au moins un tronçon à un niveau de vol donné. Avantageusement, le système de calcul est configuré pour déterminer une trajectoire complète de l'aéronef sur plusieurs niveaux de vols entre un premier point géographique d'origine et un deuxième point géographique de destination, la mission pouvant comprendre une ou plusieurs étapes.

La préparation et la définition d'une mission d'aéronef entre un premier point géographique et un deuxième point géographique est une tâche consommatrice en temps. Elle nécessite notamment de déterminer la route que va suivre l'aéronef, le profil de vol associé, le chargement en passagers, en fret et en carburant et le calcul de performances basses vitesses, ainsi que la vérification du domaine de vol de l'aéronef.

Cette définition est effectuée en fonction d'un contexte de mission incluant la météorologie, les routes aériennes à emprunter, la connectivité avec des systèmes de communication par satellite et d'un contexte avion qui inclut la configuration et le type d'aéronef utilisé, ainsi que son état de fonctionnement.

Généralement, dans l'aviation civile, les compagnies aériennes et/ou des fournisseurs externes disposent de systèmes de calcul permettant de fournir un plan de vol et des performances aéronef attendues, par exemple une quantité de carburant requise.

Dans l'aviation d'affaires, les contraintes pesant sur l'équipage sont importantes et spécifiques. Les clients demandent parfois à l'équipage de respecter des critères de mission plus stricts, par exemple en matière de confort du passager pendant le vol, de possibilité de se connecter à des systèmes de transmission par satellite, de masse offerte par l'avion etc.

De plus, les conditions de mission, notamment les horaires de décollage, sont sujets à changement et la destination peut changer rapidement en fonction des besoins propres des passagers.

Dans ce cadre, les systèmes de fournitures de plans de vol existants ne donnent pas entière satisfaction.

En particulier, ces systèmes sont conçus pour fonctionner sur une somme de critères d'entrée (vitesse, niveau de vol, nombre de passagers,...) auquel correspondra une seule solution de navigation. Il est donc fréquemment nécessaire d'effectuer plusieurs itérations pour ajuster les hypothèses de mission.

Les résultats obtenus par les systèmes de fournisseurs de plan de vol sont en outre généralement incomplets en ce qui concerne les critères requis pour effectuer la mission, notamment dans la gestion des critères clients, du contexte avion et des performances.

Par conséquent, les solutions de trajectoires proposées par le fournisseur ne sont pas satisfaisantes pour le client et/ou résultent en un temps de vol non optimal et/ou en une consommation en carburant augmentée.

Un but de l'invention est donc de fournir un système de calcul de mission d'aéronef qui permette à l'équipage de trouver facilement une trajectoire optimisée en tenant compte de l'état courant de l'aéronef, des critères imposés par le client, et des contraintes du volume de mission, incluant notamment les routes aériennes et la météorologie

À cet effet, l'invention a pour objet un système selon la revendication 1.

Le système selon l'invention peut comprendre l'une ou plusieurs des caractéristiques des revendications 1 à 12 ou l'une des caractéristiques suivantes, prise(s) isolément ou suivant toute combinaison techniquement possible:
- le premier module de calcul de trajectoires est propre à calculer la trajectoire optimale de mission comme si l'aéronef était apte à effectuer un vol libre en tenant compte des spécifications de mission, sans tenir compte d'un réseau de points de passage et/ou de trajectoires imposées entre les points de passage ;
- le réseau de points de passage et/ou de trajectoires imposées entre les points de passage est défini par des autorités de contrôle aérien.

L'invention a également pour objet un procédé selon la revendication 13.

Le procédé selon l'invention peut comprendre l'une ou plusieurs des caractéristiques des revendications 14 ou 15 ou l'une des caractéristiques suivantes, prise(s) isolément ou suivant toute combinaison techniquement possible :
- le premier module de calcul de trajectoires calcule la trajectoire optimale de mission comme si l'aéronef était apte à effectuer un vol libre en tenant compte des spécifications de mission, sans tenir compte d'un réseau de points de passage et/ou de trajectoires imposées entre les points de passage ;
- le réseau de points de passage et/ou de trajectoires imposées entre les points de passage est défini par des autorités de contrôle aérien.

L'invention sera mieux comprise à la lecture de la description qui va suivre, donnée uniquement à titre d'exemple, et faite en se référant aux dessins annexés, sur lesquels :
- la figure 1 est un schéma synoptique illustrant un premier système de calcul de mission selon l'invention ;
- la figure 2 est une vue schématique d'une zone de navigation de l'aéronef dans laquelle se trouvent des régions ne répondant pas aux contraintes de mission et des régions ne répondant pas aux critères de mission ;
- la figure 3 est une vue schématique illustrant le principe de mise en oeuvre d'un procédé de calcul de mission selon l'invention ;
- la figure 4 est une vue illustrative d'une trajectoire orthodromique, d'une trajectoire fournie par un fournisseur classique, d'une trajectoire en vol libre obtenu par la méthode des isochrones, et d'une trajectoire obtenue par le procédé selon l'invention ;
- les figures 5 à 8 sont des vues schématiques illustrant le principe de calcul de trajectoire libre par isochrones dans une première étape d'un procédé selon l'invention ;
- les figures 9 à 15 sont des vues schématiques illustrant le principe de calcul de trajectoire optimisée dans un réseau de contraintes, obtenu à partir de la trajectoire libre dans une région d'optimisation de la trajectoire ;
- la figure 16 est une vue schématique d'un deuxième système de calcul de mission selon l'invention ; et
- la figure 17 est une vue schématique de dessus illustrant la mise en oeuvre d'un procédé de calcul de trajectoire à l'aide du moteur de calcul du système de calcul de mission selon l'invention.

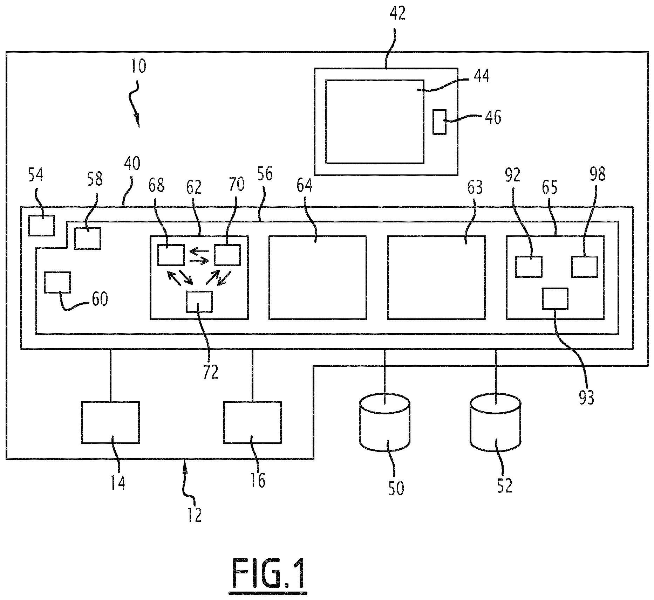

Un premier système 10 de calcul de mission selon l'invention, qui, dans cet exemple est présent dans le cockpit 12 d'un aéronef, est illustré par la figure 1.

L'aéronef est de préférence un aéronef civil, notamment un avion d'affaires.

D'une manière connue, le cockpit 12 de l'aéronef est destiné à commander l'ensemble des systèmes de l'aéronef lors de son utilisation.

Le cockpit 12 comporte notamment, outre le système 10 de calcul de mission, un système 14 de conduite de vol du cockpit de l'aéronef (« Flight Management System » en anglais ou « FMS »), et un système 16 de gestion et de suivi des différents systèmes avion.

Le système de conduite de vol 14 est destiné à assister le pilote de l'aéronef pour mener la navigation de l'aéronef lors d'une mission. Il est propre à fournir des informations notamment sur la route suivie par l'aéronef, et sur des paramètres d'évolution de l'aéronef tels que la consommation en carburant.

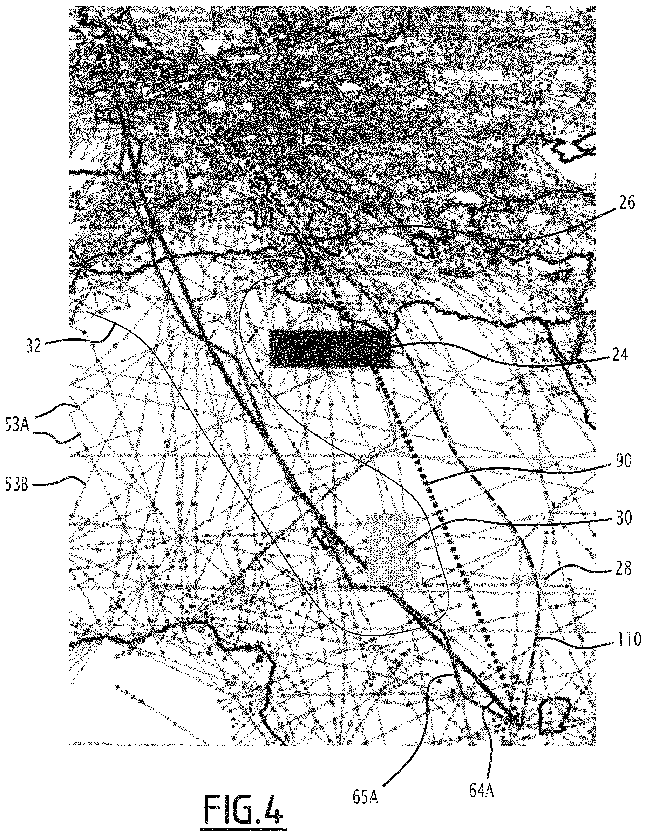

Il est également propre à guider l'aéronef pour lui faire suivre une trajectoire prédéterminée entre un premier point géographique 18 d'origine et un deuxième point géographique 20 de destination (représentés schématiquement sur la figure 4).

Le système 16 de gestion et de suivi des différents systèmes avion est notamment destiné à permettre à l'équipage de suivre et éventuellement de piloter l'ensemble des systèmes aéronef. Il est propre en particulier à déterminer un état de fonctionnement de l'aéronef, notamment la présence de défauts et de pannes présents sur l'aéronef au sol et/ou en vol. Comme on le verra plus bas, le système de calcul de mission 10 selon l'invention est raccordé au système 16 pour prendre en compte l'état de l'avion dans les calculs de mission.

La mission effectuée par l'aéronef comporte au moins une étape 22 (ou « leg ») entre un premier point géographique 18 d'origine et un deuxième point géographique 20 de destination. Dans certains cas, la mission effectuée par l'aéronef comporte une pluralité d'étapes 22 successives, le deuxième point géographique 20 de destination d'une première étape constituant le premier point géographique 18 d'origine d'une deuxième étape.

La mission est effectuée en suivant des spécifications opérationnelles qui comprennent notamment un contexte de mission et un contexte avion.

Le contexte de mission comporte par exemple au moins une contrainte d'opération, notamment un nombre de passagers à transporter, un poids maximum au décollage lié notamment à une longueur de piste disponible, une charge en carburant de navigation, une charge en carburant de réserve, un horaire de départ et/ou un horaire d'arrivée imposés, une distance maximale à parcourir, et/ou une distance à un terrain alternatif en route.

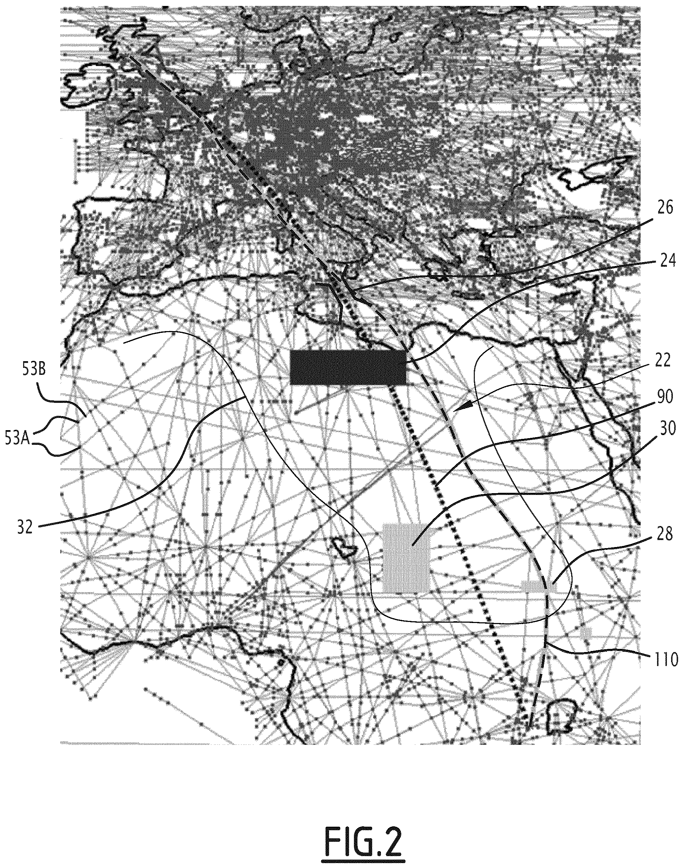

En référence à la figure 2, le contexte de mission comprend avantageusement des contraintes de navigation, comme par exemple des zones 24 ou des niveaux de vol interdits, des routes 26 aériennes ou des niveaux de vol imposés, ou plus globalement des zones de vol libre et/ou des zones de vol imposé par les voies aériennes.

Le contexte de mission comprend avantageusement des contraintes météorologiques telles que des zones 28 de phénomènes météorologiques dangereux notamment de formation de gel ou de cumulonimbus.

Le contexte de mission comprend éventuellement aussi des contraintes de confort passager, notamment des zones 30 de turbulences à éviter, en particulier en fonction d'un niveau de turbulences souhaité, choisi par exemple parmi un niveau faible, un niveau moyen, et un niveau fort de turbulences, ou des zones 32 de couverture de télécommunication par satellite pour permettre une télécommunication entre l'aéronef et le monde extérieur notamment au sol, en particulier choisi parmi un niveau faible, un niveau moyen et un bon niveau de possibilité de communication.

Le contexte avion peut comprendre des contraintes d'utilisation liées à des autorisations à partir (ou « dispatch ») et/ou des contraintes liées à un état particulier de l'aéronef en termes de défauts et/ou de pannes sur un ou plusieurs équipements de l'aéronef.

Par exemple, une autorisation à partir liée à certains défauts de l'aéronef peut imposer un niveau de vol maximal et/ou une vitesse maximale. Un défaut de rentrée du train d'atterrissage ou d'un volet peut également imposer une contrainte de consommation en carburant augmentée.

Le système de calcul de mission 10 est destiné à établir une trajectoire de l'aéronef pour effectuer l'étape 22 entre au moins un premier point géographique 18 d'origine et au moins un deuxième point géographique 20 de destination, en tenant compte des spécifications opérationnelles, et notamment du contexte de mission et du contexte avion, tout en suivant les routes aériennes existantes.

La trajectoire obtenue par l'intermédiaire du système de calcul de mission 10 inclut la route de l'aéronef en latitude et en longitude, à au minimum un palier d'altitude, avantageusement avec un profil de vol en altitude.

Avantageusement, le système de calcul de mission 10 est en outre propre à établir des paramètres de plan de vol, notamment le poids et l'équilibre de l'aéronef, le carton de décollage et d'atterrissage (c'est-à-dire les données de vol pour le pilote relative au guidage telles que les vitesses V1, V2, VR sur la piste, l'accélération au lâcher des freins, le régime moteur au décollage, et/ou l'assiette au décollage) ainsi que le calcul des masses limites au décollage et à l'atterrissage, la météorologie à basse vitesse (c'est-à-dire en surface) et à grande vitesse (c'est-à-dire en route), les informations de contrôle aérien (service de diffusion ATIS pour « Automated Terminal Information Service », e-NOTAM pour « Notice to airmen » , fréquence de télécommunications, FIRS pour « Flight Information RegionS », centre de contrôle aérien), et/ou les terrains alternatifs disponibles à destination, et en cours de route.

En référence à la figure 1, le système de calcul de mission 10 comporte un moteur de calcul 40 et avantageusement, une interface utilisateur 42 de paramétrage et de restitution formant une platine de mission.

L'interface utilisateur 42 comporte par exemple au moins un écran 44, et au moins un organe 46 de sélection et de saisie d'information par l'utilisateur, qui peut être un clavier réel ou virtuel, une souris et/ou un système tactile.

L'interface utilisateur 42 est propre à autoriser l'utilisateur à saisir au moins une partie des spécifications opérationnelles, notamment les points géographiques 18, 20 d'origine et de destination, des points de passage, des horaires souhaités, des charges souhaitées, un vent maximum sur la trajectoire, etc.

Elle est propre avantageusement à permettre à l'utilisateur de définir au moins une partie du contexte de mission, en particulier les contraintes de navigation et de confort passager, et/ou de définir au moins une partie du contexte avion.

Un exemple d'interface 42 est décrit dans la demande de brevet français intitulée « Système de calcul de mission d'un aéronef, comportant une platine de mission et procédé associé » déposée sous le numéro 17 01234 par la Demanderesse.

Le moteur de calcul 40 est connecté à l'interface 42. Il est avantageusement raccordé également au système de conduite de vol 14, au système de gestion et de suivi 16.

Il est propre à interroger une base de données 50 météorologique et/ou une base de données 52 d'information de navigation, par exemple par l'intermédiaire d'un réseau de données, notamment un réseau de données sans fil.

La base de données météorologique 50 contient des données météorologiques actuelles et prédictives dans la zone de navigation de l'aéronef dans un volume de mission s'étendant entre le point d'origine 18 et le point de destination 20. Le volume de mission présente de préférence une largeur significative, par exemple au moins 700 miles nautiques, de part et d'autre de la trajectoire orthodromique entre le point d'origine 18 et le point de destination 20.

Ces données météorologiques sont fournies à plusieurs niveaux de vol d'altitudes, par exemple tous les 304 m (1000 pieds), à une altitude comprise par exemple entre 0 m et 15545 m (51000 pieds).

Les données météorologiques sont fournies en altitude mais aussi en fournissant un composant météorologique évolutif dans le temps. Ce composant évolutif est obtenu à l'aide de données de prévision météorologiques, pouvant inclure une pluralité de cartes météorologiques à des instants successifs dans le temps (par exemple toutes les heures).

Ces données météorologiques incluent notamment la vitesse et la direction du vent, la température, la pression, les précipitations, les phénomènes dangereux (gel, orages / cumulonimbus), la turbulence, le niveau de la tropopause, les nuages de cendre volcanique, les nuages de poussière / sable, la visibilité, ainsi que les observations aéronautiques sur zone ou en route (METAR, PIREPS) et les prévisions sur zone (TAF)... Elles comportent éventuellement la définition et l'évolution dans le temps et dans l'espace des coordonnées géographiques de zones 28 de phénomènes météorologiques dangereux et/ou de zones de turbulences 30.

Ces données météorologiques définissent un contexte météorologique, de préférence évolutif, dans le volume de mission s'étendant entre le point géographique d'origine 18 et le point géographique de destination 20.

La base de données d'information de navigation 52 contient des données d'information sur les terrains au point d'origine 18 et au point de destination 20, et entre ces points 18, 20. La base de données d'information de navigation 52 comporte avantageusement une sous-base de données aéroports (longueurs de piste, orientation des pistes, pentes, etc.) et une sous-base de données de navigation. Les données de navigation incluent notamment un réseau de points de passage 53A (ou « waypoints ») et les trajectoires 53B imposées entre les points de passage, tel que définies par les autorités aériennes dans chaque pays.

Elle contient avantageusement la définition des coordonnées géographiques de zones et/ou de niveaux de vol interdits 24, notamment en raison de données géopolitiques, et/ou de routes 26 aériennes imposées.

Elle comporte éventuellement la définition de zones 32 de couverture de télécommunications par satellite (SATCOM).

Le moteur de calcul 40 comporte au moins un calculateur comprenant au moins un processeur 54 et une mémoire 56. La mémoire 56 contient des modules logiciels propres à être exécutés par le processeur 54.

En particulier, la mémoire 56 contient un module logiciel 58 d'initialisation de spécifications de mission, propre à acquérir des spécifications opérationnelles de la mission à partir notamment de l'interface 42, et un module logiciel 60 de récupération d'un contexte météorologique à partir de la base de données 50.

La mémoire 56 contient en outre un module logiciel 62 de détermination de performances avion, en fonction des spécifications de mission, du contexte météorologique et du contexte avion.

Selon l'invention, la mémoire 56 contient également un premier module logiciel 64 de calcul d'une première trajectoire de mission optimale 64A, en fonction des performances avion déterminées, du contexte météorologique et des spécifications de mission, le premier module de calcul 64 étant propre à calculer la première trajectoire optimale de mission 64A de manière non contrainte par un réseau de points de passage 53A et/ou de trajectoires 53B imposées entre les points de passage 53A.

La mémoire 56 contient aussi un module 63 de définition, autour de la première trajectoire optimale de mission 64A, d'une région d'optimisation 63A de la trajectoire optimale 64A et un deuxième module 65 de calcul d'une trajectoire optimisée 65A de l'aéronef dans la région d'optimisation 63A, de manière contrainte par un réseau de points de passages 53A et/ou de trajectoires 53B imposées entre les points de passage 53A.

Le module d'initialisation 58 est propre à acquérir les spécifications opérationnelles de la mission à partir de l'interface 42, et/ou du système de gestion et de suivi 16.

Le module de récupération 60 est propre à interroger la base de données météorologique 50 pour obtenir notamment les vitesses et les directions du vent dans le volume de mission s'étendant entre le point d'origine 18 et le point de destination 20, à plusieurs niveaux de vol.

Le module de détermination 62 comporte une application logicielle 66 de détermination du poids et de l'équilibre de l'aéronef, destinée à déterminer le centre de gravité de l'aéronef, une application logicielle 68 de détermination de performances haute vitesse, et avantageusement une application logicielle 70 de détermination de performances basse vitesse.

L'application 66 de détermination du poids et de l'équilibre de l'aéronef est propre à déterminer la position du centre de gravité de l'aéronef en l'absence de carburant dans l'aéronef (ou « Zero Fuel Weight Center of Gravity ») et la masse de l'aéronef en l'absence de carburant dans l'aéronef (ou « Zero Fuel Weight»), en fonction de la masse à vide de l'aéronef, des équipements embarqués dans l'aéronef, des passagers et/ou du fret embarqué, et de leur position dans l'aéronef, ainsi qu'une surveillance du domaine de vol de l'avion (diagramme masse - centrage).

L'application de détermination de performances haute vitesse 68 est propre à déterminer la masse de carburant à embarquer dans l'aéronef sur une trajectoire donnée, par exemple une trajectoire orthodromique 90 entre le point d'origine 18 et le point de destination 20, en utilisant la position du centre de gravité et la masse de l'aéronef en l'absence de carburant dans l'aéronef (ou « Zero Fuel Weight») déterminées par l'application 66, une vitesse air prédéterminée, par exemple saisie ou calculée à partir des données saisies par l'interface utilisateur 42, du contexte météorologique récupéré à partir du module 60, notamment des vitesses de vent et des températures et éventuellement du contexte avion, par exemple le type et l'âge des moteurs, récupéré à partir du module d'initialisation 58.

L'application de détermination de performances basse vitesse 70 est propre à déterminer notamment la masse maximale de l'aéronef (et le carton de décollage) permettant à l'aéronef de décoller et/ou d'atterrir sur un terrain, en fonction de données de longueurs de pistes récupérées à partir de la base de données 52, et du contexte météorologique récupéré à partir du module 60.

Selon l'invention, le premier module de calcul 64 est configuré pour calculer au moins une courbe d'iso-déplacement de l'aéronef, notamment au moins une courbe isochrone et/ou au moins une courbe d'iso-consommation de carburant, à partir d'au moins un point de la trajectoire, par exemple le point géographique d'origine 18, et à déterminer la position d'au moins un autre point de la trajectoire sur la courbe d'iso-déplacement de l'aéronef.

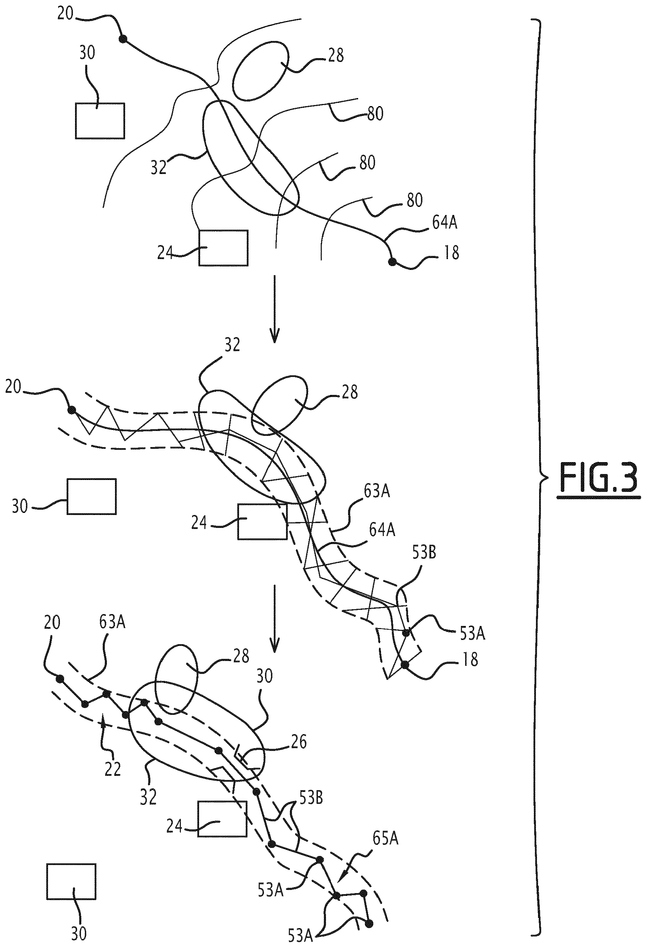

Le premier module de calcul 64 est propre à calculer au moins une trajectoire optimale 64A (voir figures 3 et 4) entre le point d'origine 18 et le point de destination 20, en déterminant des courbes d'iso-déplacement de l'aéronef, en particulier des courbes isochrones 80, de manière non contrainte par un réseau de points de passage 53A et/ou de trajectoires 53B imposées entre les points de passage.

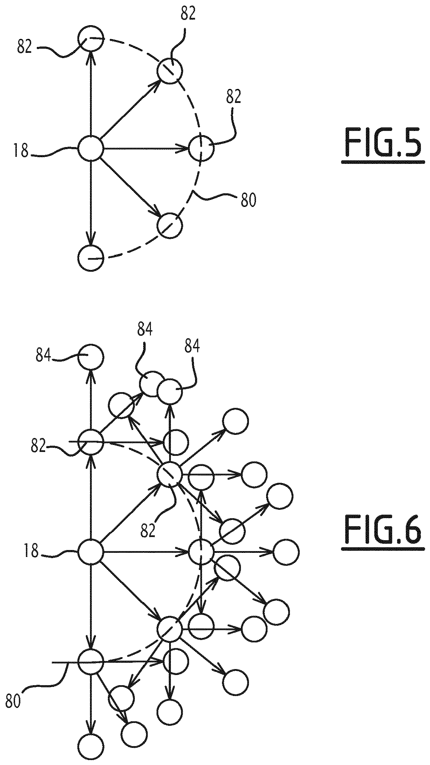

Dans l'exemple illustré par les figures 5 à 8, le premier module de calcul 64 est propre, à partir de tout point 82 d'une courbe isochrone déjà déterminée d'établir au moins une courbe isochrone 80 sur un incrément de temps prédéterminé à partir du point 82, en tenant compte de la vitesse air choisie, du contexte météorologique, des performances avion déterminées par le module de détermination 62, en particulier en utilisant les applications 66 et 68, et des spécifications opérationnelles définies par le module d'initialisation 58. Il est ensuite propre à choisir une trajectoire optimale 64A en se fondant sur les courbes isochrones 80 déterminées.

Par définition, une courbe isochrone 80 est une courbe reliant les points accessibles 84 à l'aéronef à partir d'un point donné (qui peut être le point d'origine 18 ou un point 82 sur une courbe isochrone) en un temps donné qui correspond à un ou plusieurs incréments de temps. Chaque incrément de temps est par exemple compris entre 1 minute et 1 heure, notamment entre 2 minutes et 10 minutes, par exemple 5 minutes.

Dans cet exemple, en référence à la figure 6, chaque courbe isochrone 80 est déterminée à partir d'un point donné 82 en calculant à partir du point donné 82 tous les points 84 accessibles à l'aéronef, à une vitesse air donnée, en tenant compte du contexte météorologique, notamment de la direction et de l'intensité du vent, telles que fournies par le module de récupération 60 et des performances avion, telles que déterminées par le module de détermination 62.

Avantageusement, comme illustré par les figures 6 à 8, le module de calcul 64 est propre à calculer une succession de courbes isochrones 80, en calculant, à partir de chaque point 82 d'une courbe isochrone 80 donnée tous les points 84 accessibles à l'aéronef durant un incrément de temps donné pour la vitesse donnée et/ou pour la consommation donnée en carburant, puis à répéter ce calcul à partir de tout point 82 de la courbe isochrone 80 ainsi calculée.

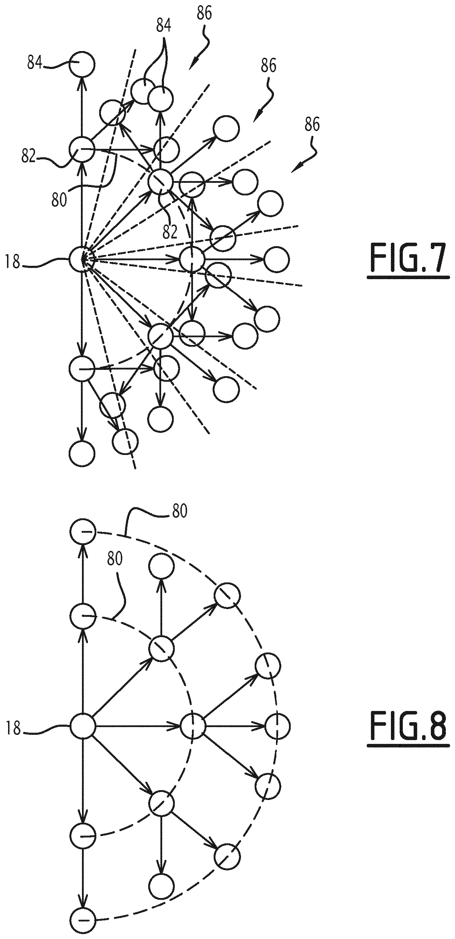

Avantageusement, dans l'exemple illustré par la figure 7, le premier module de calcul 64 est propre à découper l'espace à partir du point géographique d'origine 18 en secteurs angulaires 86 distincts, puis à sélectionner, dans chaque secteur angulaire 86, le point de distance maximale depuis le point géographique d'origine 18 dans ce secteur angulaire parmi tous les points 84 accessibles à l'aéronef, situé dans ce secteur angulaire, durant l'incrément de temps donné.

Chaque secteur angulaire présente par exemple une étendue angulaire inférieure à 90°.

Le premier module de calcul 64 est propre à sélectivement exclure les points qui sont situés dans les zones ou niveaux de vol interdits 24, dans les zones 28 de phénomènes météorologiques dangereux et/ou dans les zones de turbulences 30. Le module de calcul 24 est propre à exclure également les points qui ne seraient pas situés dans une zone de couverture satellite 32.

Néanmoins, selon l'invention, le premier module de calcul 64 est propre à déterminer chaque point de la trajectoire optimale 64A de manière non contrainte par un réseau de points de passage 53A et/ou de trajectoires 53B imposées entre les points de passage 53A.

Ainsi, la détermination de la trajectoire optimale 64A par le premier module de calcul 64 est mise en oeuvre comme si l'aéronef était apte à effectuer un vol libre en tenant compte des spécifications de mission, mais sans tenir compte du réseau de points de passage 53A et/ou de trajectoires 53B imposées entre les points de passage 53A qui sont définis par les autorités de contrôle aérien.

Avantageusement, le premier module de calcul 64 est propre à calculer les courbes isochrones 80 à partir d'un point 82, situé à un premier niveau de vol au même niveau de vol que le point 82, et à plusieurs niveaux de vol voisins du premier niveau de vol au-dessus et en dessous du premier niveau de vol, comme décrit dans la demande de brevet français de la Demanderesse n°17 01235 .

Le premier module de calcul 64 est ensuite propre à définir une trajectoire optimale 64A en choisissant sur des courbes isochrones 80 successives des points successifs de la trajectoire 64A.

En référence à la figure 3, le module de définition 63 est propre à définir la région d'optimisation 63A de la trajectoire en fonction d'une distance latérale prédéterminée à chaque point de la trajectoire optimale 64A définie par le premier module de calcul 64 et en fonction des spécifications opérationnelles de mission, notamment du contexte de mission, en particulier des contraintes de navigation, des contraintes météorologiques, et des contraintes de confort passager.

Avantageusement, le module de définition 63 est propre à délimiter latéralement la région d'optimisation 63A de la trajectoire 64A par des limites latérales s'étendant latéralement à une distance choisie en fonction de la densité du réseau aérien de chaque point de la trajectoire optimale 64A.

Cette distance choisie est généralement inférieure à 1852 km (1000 miles nautiques ou « nm ») et peut être comprise entre 185 km (100 nm) et 926 km (500 nm) dans un réseau de faible densité, par exemple en Afrique, et entre 183 km (99 nm) et 55 km (30 nm) dans un réseau de forte densité comme en Europe.

Ainsi, la région d'optimisation 63A est définie généralement par une bande englobant la trajectoire 64A. La bande est potentiellement contrainte également par des zones de vol interdites 24, par des zones 28 de phénomènes météorologiques dangereux et/ou par des zones de turbulences 30. Elle englobe selon le cas des zones de couverture satellite 32.

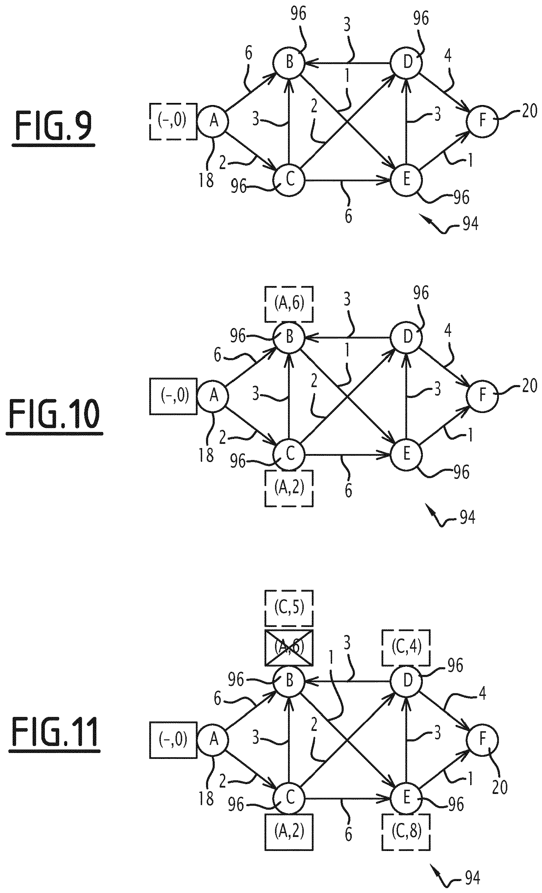

Le deuxième module de calcul 65 de trajectoires 65A comporte une application 92 de définition d'un réseau 94 de nœuds 96 (voir figure 9) entre le point géographique d'origine 18 et le point géographique de destination 20 à partir du réseau de points de passages 53A et/ou de trajectoires 53B imposées entre les points de passage 53A, et une application 93 de définition d'un coût associé au passage d'un nœud 96 à un nœud adjacent 96 parmi les nœuds 96 du réseau 94.

Le deuxième module de calcul 65 comporte également une application 98 de détermination de la trajectoire optimisée 65A dans le réseau 94 de nœuds 96 sur la base d'une minimisation du coût total cumulé entre le point géographique d'origine 18 et le point géographique de destination 20.

L'application de définition 92 est propre à charger les coordonnées de points de passage 53A et de trajectoires 53B imposées entre les points de passage 53A à partir de la base de données 52, au sein de la région d'optimisation 63A.

L'application de définition 92 est propre à définir, parmi les points de passage 53A, les nœuds 96 qui sont les points de passage 53A possibles pour l'aéronef en tenant compte notamment des contraintes de mission, en particulier des contraintes de navigation, des contraintes météorologiques, et des contraintes de confort passager, telles que définies plus haut.

L'application de définition 93 est propre à définir le coût associé au passage entre deux nœuds adjacents 96 sur la base de la distance géographique séparant les deux nœuds 96, et également du contexte météorologique récupéré à partir du module 60, en particulier du contexte météorologique évolutif et éventuellement du contexte avion, par exemple le type et l'âge des moteurs, récupéré à partir du module d'initialisation 58.

L'application de détermination 98 de la trajectoire optimisée 65A est propre à mettre en œuvre un algorithme de minimisation du coût pour définir la trajectoire la moins coûteuse dans la région d'optimisation 63A passant par les nœuds 96 et par les trajectoires imposées entre les nœuds 96, depuis le point géographique d'origine 18 jusqu'au point géographique de destination 20.

L'algorithme est par exemple un algorithme de Dijkstra et/ou un algorithme A*. L'algorithme de Dijkstra prend en entrée le réseau pondéré défini plus haut entre le point géographique d'origine 18 et le point géographique de destination 20. Il construit progressivement un sous-graphe dans lequel sont classés les différents nœuds 96 par ordre croissant de leur coût minimal au point géographique d'origine 18. Le coût associé à chaque nœud 96 correspond à la somme des coûts des trajectoires empruntées entre les nœuds 96.

Avant la première itération, comme illustré par la figure 9, les coûts de chaque nœud 96 au point géographique d'origine 18 sont infinis, sauf pour le point géographique d'origine 18 pour lequel le coût est nul. Le sous-graphe de départ est l'ensemble vide.

Au cours de chaque itération, l'application de détermination 98 choisit en dehors du sous-graphe un nœud 96 de coût minimal et l'ajoute au sous-graphe (voir par exemple nœud C depuis le nœud A entouré en traits pleins sur la figure 11). Ensuite, l'application de détermination 98 met à jour les coûts associés aux nœuds voisins de celui ajouté (voir par exemple nœuds B et E depuis le nœud C entourés en pointillés sur la figure 11). Le nouveau coût du nœud 96 voisin est obtenu en ajoutant le coût de la trajectoire entre le nœud voisin et le nœud ajouté au coût du nœud ajouté.

L'application de détermination 98 continue ainsi jusqu'à épuisement des nœuds ou jusqu'à sélection du point géographique de destination 20.

Une description de l'algorithme A* est par exemple donnée dans l'article téléchargeable à l'adresse suivante : https://fr.wikipedia.org/wiki/Algorithme A*.

Une fois la trajectoire optimisée 65A obtenue, le moteur de calcul 40 est avantageusement propre à déterminer au moins un paramètre de mission de l'aéronef correspondant à la trajectoire optimisée 65A.

Le paramètre de mission est par exemple une masse totale au décollage de l'aéronef. Cette masse au décollage est calculée par l'application logicielle 68 sur la base de la consommation estimée sur la trajectoire entre le point d'origine 18 et le point de destination 20 et sur la base d'une charge en passagers et en fret prédéfinie dans les spécifications opérationnelles.

Le moteur de calcul 40 est ensuite propre à effectuer des itérations de calcul utilisant successivement les applications 66, 68, en déterminant, dans chaque itération, une nouvelle trajectoire optimale 64A à l'aide du premier module de calcul 64, une nouvelle région d'optimisation 63A à l'aide du module de détermination, puis une nouvelle trajectoire optimisée 65A à l'aide du deuxième module de calcul 64, jusqu'à atteindre une convergence sur la valeur du paramètre de mission.

A chaque itération, le moteur de mission 40 est propre à vérifier notamment que la masse au décollage obtenue à l'aide des applications 66, 68 est inférieure ou égale à la masse maximale permettant à l'aéronef de décoller obtenue à l'aide de l'application 70 pour s'assurer que l'aéronef pourra décoller sur le terrain choisi pour le décollage

Une fois la trajectoire optimisée 65A finale obtenue, le deuxième module de calcul 65 fournit un fichier de données comprenant une liste de points de passage 53A, et une liste de trajectoires 53B entre les points de passage 53A.

Le fichier de données fourni par le deuxième module de calcul 65 comporte en outre avantageusement une liste de caps TCA entre les points de passage 53A, une liste de distances DST entre les points de passage 53A, une liste de composantes de vent COMP entre les points de passage 53A, une liste de vitesses vraies TAS entre les points de passage 53A, une liste de vitesses sol GS entre les points de passage 53A, une liste de températures air statique SAT entre les points de passage 53A, une liste de niveaux de turbulence SHR entre les points de passage 53A, une liste de temps estimés d'arrivée ETA à un point de passage 53A, et une liste de temps estimés en route EET.

Ce fichier de données est propre à être récupéré par l'équipage et/ou à être chargé par saisie manuelle ou par transfert de données dans le système de conduite de vol 14, en vue d'être utilisé lors du vol.

Un procédé de calcul d'une mission, mis en œuvre à l'aide du système 10 selon l'invention, va maintenant être décrit.

Ce procédé est mis en œuvre par exemple lors de la préparation de la mission, pour établir sa faisabilité, pour préparer de manière plus précise la mission, ou pour tenir compte d'un changement de dernière minute dans une mission déjà préparée.

En variante, ce procédé est mis en œuvre lors du suivi de la mission, ou pour tester des hypothèses de modification de la mission, pour l'optimiser, ou pour la reconfigurer.

Initialement, l'utilisateur, notamment l'équipage, saisit au moins une partie des spécifications opérationnelles à l'aide de l'interface de paramétrage 42. L'utilisateur définit par exemple pour chaque étape de la mission, le point géographique d'origine 18, le point géographique de destination 20 et éventuellement, un nombre de passagers à transporter, une vitesse air souhaitée, un horaire de départ et/ou un horaire d'arrivée imposé, une distance maximale à parcourir.

Puis, lorsqu'il souhaite définir une trajectoire possible, il active le moteur de calcul 40. Le module d'initialisation 58 récupère les spécifications opérationnelles à partir notamment de l'interface 42 pour obtenir toutes les informations sur chaque étape de la mission.

Le module d'initialisation 58 récupère avantageusement d'autres spécifications opérationnelles à partir du système de gestion et de suivi 16 de l'aéronef.

Cette étape initialise les spécifications opérationnelles liées au contexte de mission et au contexte avion, par exemple la présence de pannes ou d'autorisations à partir. Cette étape initialise également les spécifications opérationnelles de confort passager, notamment en termes de connectivité et de niveau de turbulences. Cette étape de spécification des données météo acceptable est avantageusement faite au niveau de l'interface utilisateur 42.

L'initialisation est faite avantageusement en considérant une trajectoire purement orthodromique en atmosphère standard (données de vol « parfaites »).

Puis, le module 60 de récupération du contexte météorologique interroge la base de données météorologique 50 pour obtenir notamment les vitesses et les directions du vent entre le point d'origine 18 et le point de destination 20, à plusieurs niveaux de vol.

Le module de détermination de performances avion 62 est alors activé. L'application 66 de détermination du poids et de l'équilibre détermine la masse de l'aéronef et la position du centre de gravité de l'aéronef en l'absence de carburant dans l'aéronef (« Zero Fuel Weight » et « Zero Fuel Weight Center of Gravity »), en fonction de la masse à vide de l'aéronef, des équipements embarqués dans l'aéronef, des passagers et/ou du fret embarqué, et de leur position dans l'aéronef

Sur cette base, sur la base du contexte météorologique récupéré par le module de récupération 60, sur la base du contexte avion récupéré à partir du module d'initialisation 58, et sur la base de la vitesse air souhaitée, l'application de détermination de performances haute vitesse 68 détermine une trajectoire initiale 90 de l'aéronef et la consommation de l'aéronef associée en utilisant la position du centre de gravité déterminée par l'application 66.

L'application 68 calcule alors l'ensemble des paramètres de mission, en particulier la route, l'heure d'arrivée, le profil de vol, et la consommation en carburant, ce qui permet d'en déduire notamment la masse au décollage.

Puis, le premier module de calcul de trajectoire 64 est mis en œuvre. Sur la base de la masse au décollage précédemment obtenue, le premier module de calcul 64 calcule une première trajectoire optimisée en déterminant les courbes d'iso-déplacement de l'aéronef, ici les courbes isochrones 80, à partir de la position du point d'origine 18 jusqu'à la position du point de destination 20.

Comme illustré par la figure 5, à partir du point géographique d'origine 18, le premier module de calcul 64 détermine la position de chaque point 82 de la courbe isochrone 80 accessible à l'aéronef à partir du point géographique d'origine 18 en un temps donné δt qui correspond à un ou plusieurs incréments de temps. Chaque incrément de temps est par exemple compris 1 minutes et 1 heure, notamment entre 2 minutes et 10 minutes, par exemple 5 minutes..

Puis comme illustré sur la figure 6, chaque courbe isochrone 80 suivante est déterminée par le premier module de calcul 64 à partir d'un point donné 82 en calculant à partir du point donné 82 tous les points 84 accessibles à l'aéronef, à une vitesse air donnée, en tenant compte du contexte météorologique, notamment de la direction et de l'intensité du vent, telles que fournies par le module de récupération 60 et des performances avion, telles que déterminées par le module de détermination 62.

Le premier module de calcul 64 tient compte en particulier des zones 24 ou niveaux de vol interdits, des zones 28 de phénomènes météorologiques dangereux à éviter, des zones 30 de turbulences à éviter, et/ou des zones 32 de couverture satellite.

Dans l'exemple illustré sur la figure 7, le premier module de calcul 64 découpe l'espace à partir du point géographique d'origine 18 en secteurs angulaires 86 depuis le point géographique d'origine 18, chaque secteur angulaire présentant une étendue angulaire inférieure à 90°.

Puis, comme illustré par la figure 8, le premier module de calcul 64 sélectionne, dans chaque secteur angulaire 86, le point 84 de distance maximale depuis le point géographique d'origine 18, afin de construire la courbe isochrone 80 suivante.

Le module de calcul 64 définit ensuite une trajectoire optimale 64A permettant d'atteindre le point géographique de destination 20 en un temps minimal. Le premier module de calcul 64 choisit à partir de chaque point de la trajectoire un point ultérieur de la trajectoire situé sur une courbe isochrone 80.

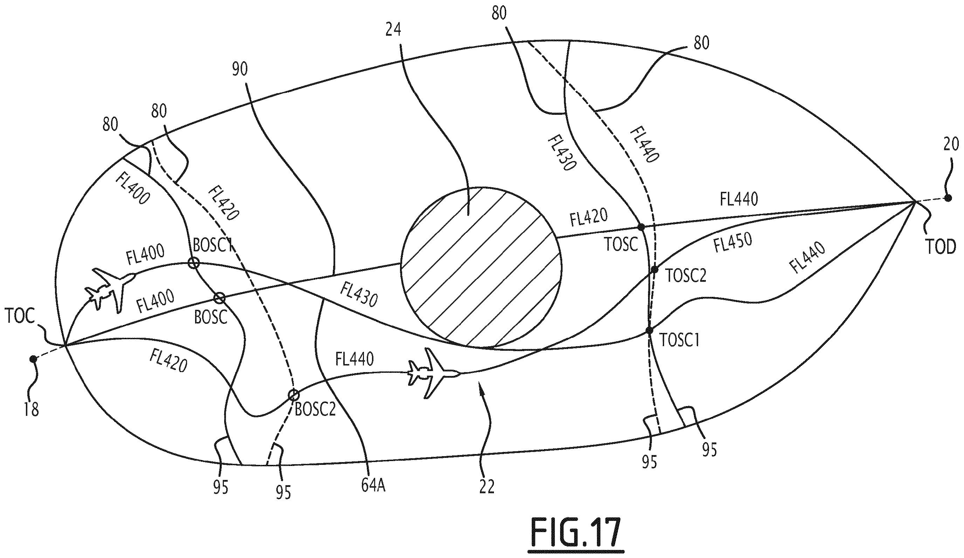

Avantageusement, en référence à la figure 17, lorsque le premier module de calcul 64 fait varier les niveaux de vol, il choisit les tronçons de trajectoire correspondant à la combinaison de niveaux de vol verticaux optimale à chaque itération, à partir d'un sommet de montée (TOC, pour « Top of Climb ») calculé à partir de la position du point d'origine 18 jusqu'à un sommet de descente (TOD, pour « Top of Descent ») calculé à partir de la position du point de destination 20.

Dans ce cas, les courbes d'iso-déplacement de l'aéronef sont déterminées par incréments de temps, pour plusieurs combinaisons de niveaux de vol verticaux (FL400, FL420, etc.), en choisissant par exemple comme base les niveaux de vol définis par la trajectoire précédente.

Comme indiqué plus haut, le premier module de calcul 64 tient compte en particulier des zones 24 ou niveaux de vol interdits, des zones 28 de phénomènes météorologiques dangereux, des zones 30 de turbulences à éviter, et/ou des zones 32 de couverture satellite.

Pour chaque niveau de vol, une fois les isochrones déterminées, le premier module de calcul 64 choisit à partir de chaque point 82 de la trajectoire un point ultérieur de la trajectoire situé sur une courbe isochrone 80. Le premier module de calcul 64 définit ainsi un tronçon de trajectoire possible associé à chaque niveau de vol.

Le premier module de calcul 64 limite le nombre de niveaux de vol possibles à chaque incrément en maintenant le niveau de vol constant jusqu'à au moins une courbe 95 de changement de niveaux de vol. La courbe 95 de changement de niveau de vol est définie par exemple pour chaque niveau de vol par un délestage de carburant donné, correspondant à une durée de vol prédéfinie à Mach constant, par exemple comprise entre 1h et 2h.

Le premier module de calcul 64 définit ensuite une trajectoire optimale 64A en choisissant les tronçons de trajectoire correspondant à la combinaison de niveaux de vol verticaux optimale à chaque itération.

Ainsi, dans l'exemple représenté sur la figure 17, le premier module de calcul 64 détermine les courbes d'iso-déplacement correspondant à une pluralité de niveaux de vol (par ex FL 400 et FL420) depuis un point initial (ici le TOC) jusqu'à la première courbe 95 de changement de niveau de vol pour définir au moins un premier tronçon de trajectoire [TOC ; BOSC1], [TOC ; BOSC2] pour chaque niveau de vol, puis les courbes d'iso-déplacement à partir de la première courbe de changement de niveau de vol 95 pour une pluralité de niveaux de vol (ici FL430, FL 440) jusqu'à une autre courbe de changement de niveau de vol 95 pour définir au moins un deuxième tronçon de trajectoire [BOSC1 ; TOSC1], [BOSC2 ; TOSC2] et répète ces calculs jusqu'à atteindre un point final (ici le TOD). Il définit ensuite au moins une trajectoire optimale 64A en associant des tronçons de trajectoires successifs parmi les tronçons de trajectoires définis pour chaque pluralité de niveaux de vol entre les courbes 95 de changement de niveau de vol.

La trajectoire optimale 64A est obtenue à chaque itération de manière non contrainte par le réseau de points de passage 53A et/ou de trajectoires 53B imposées entre les points de passage 53A.

Puis à chaque itération, comme illustré sur la figure 3, le module de définition 63 définit la région d'optimisation 63A de la trajectoire autour de la trajectoire optimale 64A en fonction d'une distance latérale prédéterminée à chaque point de la trajectoire optimale 64A définie par le premier module de calcul 64 et en fonction des spécifications opérationnelles de mission, notamment du contexte de mission, en particulier des contraintes de navigation, des contraintes météorologiques, et des contraintes de confort passager.

Avantageusement, le module de définition 63 délimite latéralement la région d'optimisation 63A de la trajectoire 64A par des limites latérales s'étendant latéralement à une distance choisie en fonction de la densité du réseau aérien de chaque point de la trajectoire optimale 64A.

Ainsi, la région d'optimisation 63A est définie généralement par une bande englobant la trajectoire 64A. Comme indiqué précédemment, la bande est également potentiellement contrainte par les zones de vol interdites 24, par les zones 28 de phénomènes météorologiques dangereux et/ou par les zones de turbulences 30. Elle englobe selon le cas les zones de couverture satellite 32.

Ensuite, comme illustré par la figure 10, l'application de définition 92 charge les coordonnées de points de passage 53A et de trajectoires 53B imposées entre les points de passage 53A à partir de la base de données 52, au sein de la région d'optimisation 63A.

L'application de définition 92 définit, parmi les points de passage 53A, les nœuds 96 qui sont les points de passage 53A possibles pour l'aéronef en tenant compte notamment des contraintes de mission, en particulier des contraintes de navigation, des contraintes météorologiques, et des contraintes de confort passager.

L'application de définition 93 définit en outre le coût associé au passage entre deux nœuds adjacents 96 sur la base de la distance géographique séparant les deux nœuds 96, et également du contexte météorologique récupéré à partir du module 60, et éventuellement du contexte avion, par exemple le type et l'âge des moteurs, récupéré à partir du module d'initialisation 58.

L'application de détermination 98 de la trajectoire optimisée 65A met ensuite en œuvre un algorithme de minimisation du coût pour définir la trajectoire la moins coûteuse passant par les nœuds 96 et par les trajectoires imposées entre les nœuds 96, depuis le point géographique d'origine 18 jusqu'au point géographique de destination 20. Cet algorithme est par exemple par un algorithme de Dijkstra.

En référence aux figures 9 à 16, l'algorithme de Dijkstra construit progressivement un sous-graphe dans lequel sont classés les différents noeuds 96 par ordre croissant de leur coût minimal au point géographique d'origine 18. Le coût associé à chaque nœud 96 correspond à la somme des coûts des trajectoires empruntées entre les nœuds 96.

Avant la première itération, les coûts de chaque nœud au point géographique d'origine 18 sont infinis, sauf pour le point géographique d'origine 18 pour lequel le coût est nul. Le sous-graphe de départ est l'ensemble vide.

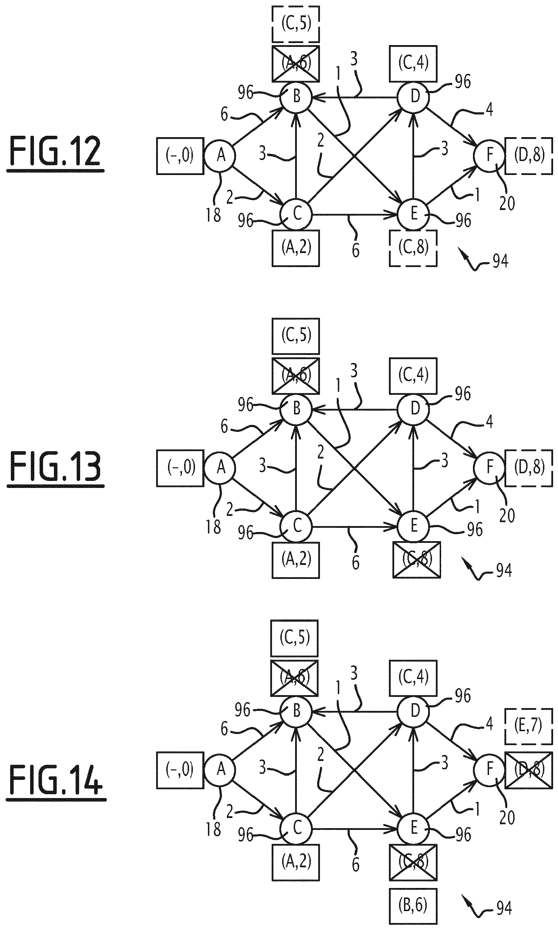

Au cours de chaque itération, l'application de détermination 98 choisit en dehors du sous-graphe un nœud 96 de coût minimal et l'ajoute au sous-graphe. Ainsi, comme illustré par les figures 11 et 12, le nœud C sur la figure 11 est celui qui présente le coût minimal. De même, à l'itération suivante, visible sur la figure 12 le nœud D est celui qui présente le coût minimal.

À chaque itération, l'application de détermination 98 met à jour les coûts des nœuds 96 voisins de celui ajouté en calculant le nouveau coût du nœud voisin ajoutant le coût de la trajectoire entre le nœud 96 voisin et le nœud 96 ajouté au coût déjà associé au nœud précédemment ajouté 96.

Par exemple, sur la figure 11 le nœud C est atteint et le coût associé à chaque nœud respectif B, D, E voisin du nœud C ajouté à l'itération précédente est calculé comme la somme du coût pour passer du point géographique d'origine 18 au nœud ajouté C, plus le coût pour passer du nœud C ajouté au noeud respectif B, D, E.

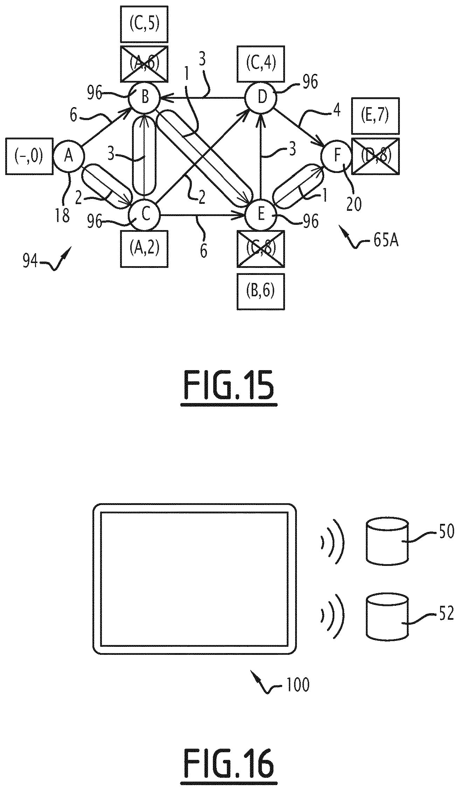

Comme illustré par la figure 13, le point géographique d'arrivée 20 ne correspond pas à un minimum de coût puisque le coût pour l'atteindre est supérieur à celui pour atteindre le point E. D'autres chemins alternatifs sont testés sur le même principe que celui décrit précédemment (voir figure 14). Comme illustré par la figure 15, l'algorithme s'arrête lorsqu'il a déterminé le chemin de coût minimal pour atteindre le point géographique d'arrivée 20. Une trajectoire optimisée 65A est alors obtenue en minimisant le coût.

La trajectoire optimisée 65A obtenue à chaque itération est contrainte par un réseau de points de passages 53A et de trajectoires imposées 53B entre les points de passage 53A dans le réseau aérien.

Le moteur de calcul 40 calcule alors l'ensemble des paramètres de mission sur la base de la trajectoire optimisée 65A obtenue à l'itération courante, en utilisant avantageusement l'application de performance haute vitesse 68 et détermine la différence entre le paramètre de mission à optimiser (par exemple la masse au décollage) pour la trajectoire initiale et le paramètre de mission à optimiser pour la trajectoire optimisée 65A.

Le moteur de calcul effectue alors de nouveaux calculs de trajectoires 64A, 65A, comme décrit précédemment, en utilisant les courbes isochrones 80, jusqu'à ce que le paramètre de mission, ici la masse au décollage, converge vers une valeur de paramètres de mission souhaitée.

La convergence est par exemple déterminée lorsque la différence entre la valeur du paramètre de mission pour la trajectoire déterminée à l'itération précédente et celle déterminée à l'itération courante est inférieure à une valeur prédéterminée.

En particulier, dans le cas de la masse au décollage, la différence entre la masse au décollage pour la trajectoire déterminée à l'itération précédente et celle déterminée à l'itération courante doit être inférieure à une masse prédéterminée par exemple égale à 100 livres.

En variante, le paramètre de mission est la masse à l'atterrissage ou la distance parcourue le long de la trajectoire.

Avantageusement, à chaque itération ou après convergence, l'application logicielle 70 de détermination de performances basse vitesse est mise en œuvre pour vérifier que les paramètres de mission obtenus sont compatibles avec les terrains sur lesquels l'aéronef est destiné à décoller et/ou à atterrir.

Le moteur de calcul 40 établit alors un fichier de données comprenant une liste de points de passage 53A, et une liste de trajectoires 53B entre les points de passage 53A.

Comme indiqué plus haut, le fichier de données fourni par le deuxième module de calcul 65 comporte en outre avantageusement une liste de caps TCA entre les points de passage 53A, une liste de distances DST entre les points de passage 53A, une liste de composantes de vent COMP entre les points de passage 53A, une liste de vitesses vraies TAS entre les points de passage 53A, une liste de vitesses sol GS entre les points de passage 53A, une liste de températures air statique SAT entre les points de passage 53A, une liste de niveaux de turbulence SHR entre les points de passage 53A, une liste de temps estimés d'arrivée ETA à un point de passage 53A, et une liste de temps estimés en route EET.

Le système de calcul 10 selon l'invention est donc particulièrement efficace pour déterminer des trajectoires optimisées 65A d'un aéronef lors d'une mission, de manière beaucoup plus précise qu'avec les outils commerciaux classiques, en tenant compte du contexte de la mission, et du contexte avion, tout en limitant la puissance de calcul nécessaire par l'utilisation combinée d'une méthode de calcul en vol sans contraintes, et un algorithme de calcul optimisant la route avec les contraintes de navigation imposées par les points de passages et trajectoires définies par les autorités de contrôle aérien.

L'hybridation des méthodes permet donc d'obtenir, avec un temps et une puissance de calcul minimale, une trajectoire optimisée 65A qui engendre un gain de temps notable pour l'aéronef par rapport à une trajectoire 110 obtenue par un système commercial, tout en étant adaptée aux zones 24, 28, 30 à éviter, et également aux zones 32 dans lesquelles l'aéronef doit circuler.

Dans la variante illustrée par la figure 16, le système de calcul de 10 est intégré au sein d'un bagage de vol électronique (« Electronic Flight Bag » ou « EFB » en anglais), ou d'un dispositif électronique portable 100.

Le dispositif électronique portable 100 est par exemple raccordé aux bases de données 50, 52 par une liaison de données sans fil suivant un protocole de transmission sans fil par exemple de type Wifi (par exemple suivant la Norme IEEE 802.11), ou Bluetooth (par exemple suivant la Norme IEEE 802.15-1-2005).

Dans une autre variante, chaque courbe d'iso-déplacement calculée par le module de calcul 64 est une courbe d'iso-consommation de carburant.

Le premier module de calcul 64 est propre, à partir de tout point 82 d'une trajectoire 22 en cours d'établir au moins une courbe d'iso-consommation de carburant sur un incrément de carburant consommé prédéterminé à partir du point 82 de la trajectoire, en tenant compte de la vitesse air choisie, du contexte météorologique, des performances avion déterminées par le module de détermination 62, et des spécifications opérationnelles définies par le module d'initialisation 58. Il est ensuite propre à choisir une trajectoire en se fondant sur les courbes courbe d'iso-consommation de carburant déterminées.

Par définition, une courbe d'iso-consommation de carburant est une courbe reliant les points accessibles à l'aéronef à partir d'un point donné 82 avec une consommation en carburant donnée qui correspond à un ou plusieurs incréments de carburant consommé. Chaque incrément de temps consommé est choisi à une valeur constante par exemple comprise entre 22,7 kg (50 livres) et 453,6 kg (1000 livres), notamment entre 36,3 kg (80 livres) et 54,4 kg (120 livres).

Dans cet exemple, chaque courbe d'iso-consommation de carburant est déterminée à partir d'un point donné 82 en calculant à partir du point donné 82 tous les points accessibles 84 à l'aéronef, à une vitesse air donnée, en tenant compte du contexte météorologique, notamment de la direction et de l'intensité du vent, tels que fournies par le module de récupération 60 et des performances avion, telles que déterminées par le module de détermination 62.

Le premier module de calcul 64 est propre à calculer une succession de courbes d'iso-consommation de carburant, en calculant, à partir de chaque point 82 d'une courbe d'iso-consommation de carburant donnée tous les points accessibles à l'aéronef pour un incrément de carburant donné pour la vitesse donnée, comme décrit plus haut pour les isochrones, puis à répéter ce calcul à partir de tout point de la courbe d'iso-consommation de carburant ainsi calculée.

Comme précédemment, le premier module de calcul 64 est propre à sélectivement exclure les points qui sont situés dans les zones ou niveaux de vol interdits 24, dans les zones 28 de phénomènes météorologiques dangereux et/ou dans les zones de turbulences 30. Au contraire, le premier module de calcul 64 est propre à exclure également les points qui ne seraient pas situés dans une zone de couverture satellite 32.

Le premier module de calcul 64 est ensuite propre à définir une trajectoire optimale 64A en choisissant sur des courbes d'iso-consommation de carburant successives des points successifs de la trajectoire optimale 64A.

Dans les modes de réalisation qui ont été décrits précédemment, le calcul de mission inclut la détermination d'une trajectoire tridimensionnelle dans laquelle les niveaux de vols sont optimisés en complément de la route sur chaque tronçon correspondant à un niveau de vol.

Dans une variante, le système 10 est apte à calculer uniquement une trajectoire optimale correspondant à une route bidimensionnelle à un seul niveau de vol entre le point géographique d'origine 18 et le point géographique de destination 20.

## Revendications

1. Système (10) de calcul de mission d'un aéronef, comportant un moteur de calcul (40) de trajectoires de l'aéronef lors de la mission comprenant :
- un premier module de calcul (64) de trajectoires, propre à calculer une trajectoire optimale de mission (64A) entre un point géographique d'origine (18) et un point géographique de destination (20) en fonction de performances avion, de spécifications opérationnelles de mission et d'un contexte météorologique, de préférence évolutif, dans un volume de mission entre le point géographique d'origine (18) et le point géographique de destination (20) ,
**caractérisé en ce que** le premier module de calcul de trajectoires (64) est propre à calculer la trajectoire optimale de mission (64A) de manière non contrainte par un réseau de points de passage (53A) et/ou de trajectoires (53B) imposées entre les points de passage (53A), le premier module de calcul de trajectoires (64) étant propre à calculer la trajectoire optimale de mission comme si l'aéronef était apte à effectuer un vol libre en tenant compte des spécifications de mission, sans tenir compte d'un réseau de points de passage et/ou de trajectoires imposées entre les points de passage ;
le moteur de calcul (40) comportant :
- un module (63) de définition, autour de la trajectoire optimale de mission (64A), d'une région (63A) d'optimisation de la trajectoire ; et
- un deuxième module de calcul (65) de trajectoires, propre à calculer une trajectoire optimisée (65A) de l'aéronef dans la région d'optimisation (63A) de manière contrainte par un réseau de points de passages (53A) et/ou de trajectoires imposées (53B) entre les points de passage (53A), en tenant compte du contexte météorologique.

2. Système (10) selon la revendication 1, dans lequel la région d'optimisation (63A) de la trajectoire est définie en fonction d'une distance latérale prédéterminée à chaque point de la trajectoire optimale (64A) et en fonction des spécifications opérationnelles de mission.

3. Système (10) selon la revendication 2, dans lequel la région d'optimisation (63A) de la trajectoire est délimitée par des limites latérales s'étendant latéralement à une distance choisie en fonction de la densité du réseau de points de passage (53A) et/ou de trajectoires (53B) imposées entre les points de passage (53A).

4. Système (10) selon l'une quelconque des revendications précédentes, dans lequel le deuxième module de calcul de trajectoires (65) est propre à définir, dans la région d'optimisation (63A) de la trajectoire, un réseau de nœuds (96) entre le point géographique d'origine (18) et le point géographique de destination (20) à partir du réseau de points de passages (53A) et/ou de trajectoires (53B) imposées entre les points de passage (53A), à définir un coût associé au passage d'un nœud (96) à un nœud (96) adjacent parmi les nœuds (96) du réseau et à déterminer la trajectoire optimisée (65A) sur la base d'une minimisation du coût total cumulé entre le point géographique d'origine (18) et le point géographique de destination (20).

5. Système (10) selon la revendication 4, dans lequel le deuxième module de calcul de trajectoires (65) est propre à mettre en œuvre un algorithme de Dijkstra et/ou un algorithme A*.

6. Système (10) selon l'une quelconque des revendications précédentes, dans lequel le premier module de calcul de trajectoires (64) est configuré pour calculer au moins une courbe d'iso-déplacement de l'aéronef, notamment au moins une courbe isochrone (80) et/ou au moins une courbe d'iso-consommation de carburant à partir d'au moins un point de la trajectoire, en particulier au moins le point géographique d'origine (18) et est propre à déterminer au moins un autre point de la trajectoire sur la courbe d'iso-déplacement de l'aéronef.

7. Système (10) selon la revendication 6, dans lequel chaque point de la trajectoire est situé sur une courbe d'iso-déplacement par rapport à un autre point de la trajectoire, le module de calcul étant propre à choisir chaque point de la trajectoire sur la courbe d'iso-déplacement en fonction de spécifications opérationnelles et/ou de performances avion.

8. Système (10) selon l'une des revendications 6 ou 7, dans lequel le premier module de calcul (64) de trajectoire est configuré pour calculer une pluralité de courbes d'iso-déplacement à plusieurs niveaux de vol à partir du point de la trajectoire.

9. Système selon la revendication 8, dans lequel le premier module de calcul (64) est configuré pour déterminer les courbes d'iso-déplacement correspondant à une pluralité de niveaux de vol depuis un point initial jusqu'à une première courbe (95) de changement de niveau de vol pour définir au moins un premier tronçon de trajectoire pour chaque niveau de vol, puis les courbes d'iso-déplacement à partir de la première courbe (95) de changement de niveau de vol pour une pluralité de niveaux de vol jusqu'à une autre courbe de changement de niveau de vol (95) pour définir au moins un deuxième tronçon de trajectoire pour chaque niveau de vol, puis pour définir ensuite au moins une trajectoire optimale (64A) en associant des tronçons de trajectoires successifs choisis parmi les tronçons de trajectoires définis pour chaque pluralité de niveaux de vol.

10. Système (10) selon l'une quelconque des revendications 6 à 9, dans lequel le premier module de calcul de trajectoires (64) est propre à découper l'espace en une pluralité de secteurs angulaires depuis le point géographique d'origine (18) ou de depuis le point géographique de destination (20), et à sélectionner chaque point d'une courbe d'iso-déplacement à un instant donné par rapport à un point d'une courbe d'iso-déplacement à un instant antérieur comme le point situé à une distance maximale du point géographique d'origine (18) ou à une distance minimale du point géographique de destination (20) dans chaque secteur angulaire.

11. Système (10) selon l'une quelconque des revendications précédentes, comportant :
- un module d'initialisation (58) de spécifications d'une mission incluant au moins un point géographique d'origine (18), un point géographique de destination (20), et des spécifications opérationnelles de mission ;
- un module de récupération (60) d'un contexte météorologique, en particulier d'un contexte météorologique évolutif dans un volume de mission s'étendant entre le point géographique d'origine (18) et le point géographique de destination (20) ;
- un module de détermination (62) de performances avion, propre à déterminer des performances avion en fonction des spécifications opérationnelles de mission et du contexte météorologique.

12. Système (10) selon l'une quelconque des revendications précédentes, dans lequel la ou chaque spécification opérationnelle inclut un contexte avion, notamment un type d'équipement défectueux, une autorisation à partir ou une panne, et/ou inclut un contexte de mission, notamment une zone météorologique à éviter, une zone interdite (24) ou une zone de passage souhaitée (32).

13. Procédé de calcul de mission d'un aéronef, utilisant un système (10) de calcul de missions comportant un moteur de calcul (40) de trajectoires de l'aéronef lors de la mission, le procédé comportant les étapes suivantes :
- calcul, par un premier module de calcul (64) de trajectoires du moteur de calcul (40), d'une première trajectoire optimale de mission (64A) entre un point géographique d'origine (18) et un point géographique de destination (20) en fonction de performances avion, de spécifications opérationnelles de mission et d'un contexte météorologique, de préférence évolutif, dans un volume de mission entre le point géographique d'origine (18) et le point géographique de destination (20),
le calcul de la trajectoire optimale (64A) de mission s'effectuant de manière non contrainte par un réseau de points de passage (53A) et/ou de trajectoires (53B) imposées entre les points de passage (53A), le premier module de calcul de trajectoires (64) calculant la trajectoire optimale de mission comme si l'aéronef était apte à effectuer un vol libre en tenant compte des spécifications de mission, sans tenir compte d'un réseau de points de passage et/ou de trajectoires imposées entre les points de passage;
- définition, par un module (63) de définition du moteur de calcul (40), d'une région d'optimisation de la trajectoire (63A) autour de la première trajectoire optimale de mission (64A) ; et
- calcul, par un deuxième module de calcul (65) de trajectoires, d'une trajectoire optimisée (65A) de l'aéronef dans la région d'optimisation (63A) de manière contrainte par un réseau de points de passages (53A) et/ou de trajectoires (53B) imposées entre les points de passage (53A), en tenant compte du contexte météorologique.

14. Procédé selon la revendication 13, dans lequel la région d'optimisation (63A) de la trajectoire est définie en fonction d'une distance latérale prédéterminée à chaque point de la trajectoire optimale (64) et en fonction des spécifications opérationnelles de mission.

15. Procédé selon l'une quelconque des revendications 13 à 14, dans lequel le calcul de la trajectoire optimisée (65A) comporte la définition, dans la région d'optimisation, d'un réseau de nœuds (96) entre le point géographique d'origine (18) et le point géographique de destination (20) à partir du réseau de points de passages (53A) et/ou de trajectoires imposées (53B) entre les points de passage (53A), la définition d'un coût associé au passage d'un nœud (96) à un nœud (96) adjacent parmi les nœuds (96) du réseau et la détermination de la trajectoire optimisée (65A) sur la base d'une minimisation du coût total cumulé entre le point géographique d'origine (18) et le point géographique de destination (20).

## Patentansprüche

1. System (10) zur Berechnung der Mission eines Luftfahrzeugs, umfassend einen Berechnungsmotor (40) für Flugbahnen des Luftfahrzeugs während der Mission, umfassend:
- ein erstes Berechnungsmodul (64) von Flugbahnen, das geeignet ist, eine optimale Missionsflugbahn (64A) zwischen einem geografischen Ursprungspunkt (18) und einem geografischen Zielpunkt (20) abhängig von Luftfahrzeugleistungen, operativen Missionsspezifikationen und einem vorzugsweise sich entwickelnden meteorologischen Kontext in einem Missionsvolumen zwischen dem geografischen Ursprungspunkt (18) und dem geografischen Zielpunkt (20) zu berechnen,
**dadurch gekennzeichnet, dass** das erste Flugbahnberechnungsmodul (64) dazu geeignet ist, die optimale Missionsflugbahn (64A) auf eine Weise zu berechnen, die nicht durch ein Netz von Wegpunkten (53A) und/oder von Flugbahnen (53B), die zwischen den Wegpunkten (53A) auferlegt sind, eingeschränkt ist, wobei das erste Flugbahnberechnungsmodul (64) dazu geeignet ist, die optimale Missionsflugbahn so zu berechnen, als ob das Luftfahrzeug unter Berücksichtigung der Missionsspezifikationen geeignet wäre, um einen freien Flug auszuführen, ohne Berücksichtigung eines Netzes von Wegpunkten und/oder auferlegten Flugbahnen zwischen den Wegpunkten;
der Berechnungsmotor (40) umfassend:
- ein Modul (63) zum Definieren, um die optimale Missionsflugbahn (64A) herum, einer Region (63A) zum Optimieren der Flugbahn; und
- ein zweites Berechnungsmodul (65) von Flugbahnen, das geeignet ist, eine optimierte Flugbahn (65A) des Luftfahrzeugs in der Optimierungsregion (63A) auf eine Weise zu berechnen, die durch ein Netz von Wegpunkten (53A) und/oder auferlegten Flugbahnen (53B) zwischen den Wegpunkten (53A) eingeschränkt ist, wobei der meteorologische Kontext berücksichtigt wird.

2. System (10) nach Anspruch 1, wobei die Optimierungsregion (63A) der Flugbahn abhängig von einem vorbestimmten seitlichen Abstand zu jedem Punkt der optimalen Flugbahn (64A) und abhängig von den operationellen Missionsspezifikationen definiert wird.

3. System (10) nach Anspruch 2, wobei die Optimierungsregion (63A) durch seitliche Begrenzungen begrenzt ist, die sich seitlich in einem Abstand erstrecken, der abhängig von der Dichte des Netzes von Wegpunkten (53A) und/oder von zwischen den Wegpunkten (53A) auferlegten Flugbahnen (53B) gewählt wird.

4. System (10) nach einem der vorherigen Ansprüche, wobei das zweite Flugbahnberechnungsmodul (65) dazu geeignet ist, in der Optimierungsregion (63A) der Flugbahn ein Netz von Knoten (96) zwischen dem geografischen Ursprungspunkt (18) und dem geografischen Zielpunkt (20) aus dem Netz von Wegpunkten (53A) und/oder von Flugbahnen (53B) zu definieren, die zwischen den Wegpunkten (53A) auferlegt sind, eine mit dem Übergang von einem Knoten (96) zu einem benachbarten Knoten (96) verbundene Kosten unter den Knoten (96) des Netzes zu definieren und die optimierte Flugbahn (65A) basierend auf einer Minimierung der kumulierten Gesamtkosten zwischen dem geografischen Ursprungspunkt (18) und dem geografischen Zielpunkt (20) zu bestimmen.

5. System (10) nach Anspruch 4, wobei das zweite Flugbahnberechnungsmodul (65) geeignet ist, einen Dijkstra-Algorithmus und/oder einen A*-Algorithmus zu implementieren.

6. System (10) nach einem der vorherigen Ansprüche, wobei das erste Bahnberechnungsmodul (64) konfiguriert ist, um mindestens eine Iso-Bewegungskurve des Luftfahrzeugs, insbesondere mindestens eine Isochronenkurve (80) und/oder mindestens eine Iso-Treibstoffverbrauchskurve ausgehend von mindestens einem Punkt der Bahn, insbesondere mindestens dem geografischen Ursprungspunkt (18), zu berechnen, und geeignet ist, um mindestens einen weiteren Punkt der Bahn auf der Iso-Bewegungskurve des Luftfahrzeugs zu bestimmen.

7. System (10) nach Anspruch 6, wobei jeder Punkt der Flugbahn auf einer Iso-Bewegungskurve in Bezug auf einen anderen Punkt der Flugbahn ist, wobei das Berechnungsmodul geeignet ist, jeden Punkt der Flugbahn auf der Iso-Bewegungskurve abhängig von betrieblichen Spezifikationen und/oder Luftfahrzeugleistung auszuwählen.

8. System (10) nach einem der Ansprüche 6 oder 7, wobei das erste Flugbahnberechnungsmodul (64) konfiguriert ist, um ausgehend von dem Punkt der Flugbahn eine Vielzahl von Iso-Bewegungskurven auf mehreren Flugebenen berechnet.

9. System nach Anspruch 8, wobei das erste Berechnungsmodul (64) konfiguriert ist, um die Iso-Bewegungskurven entsprechend einer Vielzahl von Flugebenen von einem Anfangspunkt bis zu einer ersten Flugebenen-Wechselkurve (95) zu bestimmen, um mindestens einen ersten Flugbahnabschnitt für jede Flugebene zu definieren, dann die Iso-Bewegungskurven von der ersten Flugebenen-Wechselkurve (95) für eine Vielzahl von Flugebenen bis zu einer weiteren Flugebenen-Wechselkurve (95), um mindestens einen zweiten Flugbahnabschnitt für jede Flugebene zu definieren, und dann, um anschließend mindestens eine optimale Flugbahn (64A) zu definieren, indem aufeinanderfolgende Flugbahnabschnitte, die aus den für jede Vielzahl von Flugebenen definierten Flugbahnabschnitten ausgewählt werden, miteinander verknüpft werden.

10. System (10) nach einem der Ansprüche 6 bis 9, wobei das erste Flugbahnberechnungsmodul (64) dazu geeignet ist, den Raum in eine Vielzahl von Winkelsektoren von dem geografischen Ursprungspunkt (18) oder von dem geografischen Zielpunkt (20) aus zu zerlegen, und jeden Punkt einer Iso-Bewegungskurve zu einem gegebenen Zeitpunkt relativ zu einem Punkt einer Iso-Bewegungskurve zu einem früheren Zeitpunkt als den Punkt auszuwählen, der sich in einem maximalen Abstand von dem geographischen Ursprungspunkt (18) oder einem minimalen Abstand von dem geographischen Zielpunkt (20) in jedem Winkelsektor befindet.

11. System (10) nach einem der vorherigen Ansprüche, umfassend:
- ein Modul (58) zum Initialisieren von Spezifikationen einer Mission, die mindestens einen geografischen Ursprungspunkt (18), einen geografischen Zielpunkt (20) und operative Missionsspezifikationen beinhaltet;
- ein Abrufmodul (60) eines meteorologischen Kontexts, insbesondere eines sich entwickelnden meteorologischen Kontexts in einem Missionsvolumen, das sich zwischen dem geografischen Ursprungspunkt (18) und dem geografischen Zielpunkt (20) erstreckt;
- ein Bestimmungsmodul (62) von Luftfahrzeugleistungen, das geeignet ist, Luftfahrzeugleistungen basierend auf der operativen Missionsspezifikationen und des meteorologischen Kontexts zu bestimmen.

12. System (10) nach einem der vorherigen Ansprüche, wobei die oder jede Betriebsspezifikation einen Luftfahrzeugkontext, insbesondere einen fehlerhaften Ausrüstungstyp, eine Startfreigabe oder einen Ausfall, einschließt und/oder einen Missionskontext, insbesondere eine zu vermeidende Wetterzone, eine verbotene Zone (24) oder einen gewünschten Durchgangsbereich (32), einschließt.

13. Missionsberechnungsverfahren eines Luftfahrzeugs unter Verwendung eines Systems (10) zur Missionsberechnung, umfassend einen Berechnungsmotor (40) von Flugbahnen des Luftfahrzeugs während der Mission, das Verfahren umfassend die folgenden Schritte:
- Berechnen, durch ein erstes Berechnungsmodul (64) von Flugbahnen des Berechnungsmotors (40), einer ersten optimalen Missionsflugbahn (64A) zwischen einem geografischen Ursprungspunkt (18) und einem geografischen Zielpunkt (20) abhängig von Luftfahrzeugleistungen, operativen Missionsspezifikationen und einem vorzugsweise sich entwickelnden meteorologischen Kontext in einem Missionsvolumen zwischen dem geografischen Ursprungspunkt (18) und dem geografischen Zielpunkt (20),
wobei die Berechnung der optimalen Missionsflugbahn (64A) auf eine Weise erfolgt, die nicht durch ein Netz von Wegpunkten (53A) und/oder von zwischen den Wegpunkten (53A) auferlegten Flugbahnen (53B) eingeschränkt ist, wobei das erste Flugbahnberechnungsmodul (64) die optimale Missionsflugbahn so berechnet, als ob das Luftfahrzeug unter Berücksichtigung der Missionsspezifikationen geeignet wäre, um einen freien Flug auszuführen, ohne Berücksichtigung eines Netzes von Wegpunkten und/oder auferlegten Flugbahnen zwischen den Wegpunkten;
- Definieren, durch ein Modul (63) zum Definieren der Berechnungsmaschine (40), einer Flugbahnoptimierungsregion (63A) um die erste optimale Missionsflugbahn (64A); und
- Berechnen, durch ein erstes Berechnungsmodul (65) von Flugbahnen, einer optimierten Flugbahn (65A) des Luftfahrzeugs in der Optimierungsregion (63A) in einer durch ein Netz von Wegpunkten (53A) und/oder zwischen den Wegpunkten (53A) auferlegten Flugbahnen (53B) eingeschränkten Weise, wobei der meteorologische Kontext berücksichtigt wird.

14. Verfahren nach Anspruch 13, wobei die Optimierungsregion (63A) der Flugbahn basierend auf einem vorbestimmten seitlichen Abstand zu jedem Punkt der optimalen Flugbahn (64) und basierend auf der operativen Missionsspezifikationen definiert ist.

15. Verfahren nach einem der Ansprüche 13 bis 14, das Berechnen der optimierten Flugbahn (65A) umfassend die Definition, in der Optimierungsregion eines Netzes von Knoten (96) zwischen dem geografischen Ursprungspunkt (18) und dem geografischen Zielpunkt (20) aus dem Netz von Wegpunkten (53A) und/oder auferlegten Flugbahnen (53B) zwischen den Wegpunkten (53A), die Definition von Kosten, die mit dem Übergang von einem Knoten (96) zu einem benachbarten Knoten (96) unter den Knoten (96) des Netzes verbunden sind, und die Bestimmung der optimierten Flugbahn (65A) basierend auf einer Minimierung der kumulierten Gesamtkosten zwischen dem geografischen Ursprungspunkt (18) und dem geografischen Zielpunkt (20).

## Claims

1. An aircraft mission calculation system (10), comprising a calculation engine (40) for calculating an aircraft path during the mission, comprising:
- a first path calculating module (64), capable of calculating an optimal mission path (64A) between a geographical point of origin (18) and a geographical destination point (20) as a function of airplane performance, operational mission specifications and a weather context, preferably evolutive, in a mission space between the geographical point of origin (18) and the geographical destination point (20),
**characterized in that** the first path calculating module (64) is able to calculate the optimal mission path (64A) in a manner non constrained by an array of waypoints (53A) and/or paths (53B) imposed between the waypoints (53A), the first path calculating module being capable of calculating the optimal mission path as if the aircraft was able to perform a free flight taking account of mission specifications, without accounting for a network of waypoints and/or imposed paths between the waypoints;
the calculating engine (40) including:
- a module (63) for defining, around the optimal mission path (64A), an optimization region (63A) of the path; and
- a second path calculating module (65), able to calculate an optimized path (65A) of the aircraft in the optimization region (63A) in a manner constrained by a network of waypoints (53A) and/or imposed paths (53B) between the waypoints (53A), taking the weather context into account.

2. The system (10) according to claim 1, wherein the optimization region (63A) of the path is defined as a function of a predetermined lateral distance from each point of the optimal path (64A) and as a function of the operational mission specifications.

3. The system (10) according to claim 2, wherein the optimization region (63A) of the path is delimited by lateral limits extending laterally at a distance chosen as a function of the density of the network of waypoints (53A) and/or paths (53B) imposed between the waypoints (53A).

4. The system (10) according to any one of the preceding claims, wherein the second path calculating module (65) is able to define, in the optimization region (63A) of the path, a network of nodes (96) between the geographical point of origin (18) and the geographical destination point (20) from the network of waypoints (53A) and/or imposed paths (53B) between the waypoints (53A), to define a cost associated with the passage from one node (96) to an adjacent node (96) among the nodes (96) of the network and to determine the optimized path (65A) based on a minimization of the total cumulative cost between the geographical point of origin (18) and the geographical destination point (20).

5. The system (10) according to claim 4, wherein the second path calculating module (65) is able to implement a Dijkstra algorithm and/or an A* algorithm.

6. The system (10) according to any one of the preceding claims, wherein the first path calculating module (64) is configured to calculate at least one iso-movement curve of the aircraft, in particular at least one isochronous curve (80) and/or at least one fuel iso-consumption curve from at least one point of the path, in particular at least the geographical point of origin (18), and is able to determine at least one other point of the path on the iso-movement curve of the aircraft.

7. The system (10) according to claim 6, wherein each point of the path is located on an iso-movement curve relative to another point of the path, the calculating module being capable of choosing each point of the path on the iso-movement curve as a function of operational and/or performance airplane specifications.

8. The system (10) according to one of claims 6 or 7, wherein the first path calculating module (64) is configured to calculate a plurality of iso-movement curves on several flight levels from the point of the path.

9. The system according to claim 8, wherein the first calculating module (64) is configured to determine the iso-movement curves corresponding to a plurality of flight levels from an initial point to a first flight level change curve (95) to define at least a first path segment for each flight level, then the iso-movement curves from the first flight level change curve (95) for a plurality of flight levels to another flight level change curve (95) to define at least a second path segment for each flight level, then next to define at least one optimal path (64A) by combining successive path segments chosen from among the path segments defined for each plurality of flight levels.

10. The system (10) according to any one of claims 6 to 9, wherein the first path calculating module (64) is able to divide the space into a plurality of angular sectors from the geographical point of origin (18) or from the geographical destination point (20), and to select each point of an iso-movement curve at a given moment relative to a point of an iso-movement curve at an earlier moment as the point located at a maximum distance from the geographical point of origin (18) or at a minimum distance from the geographical destination point (20) in each angular sector.

11. The system (10) according to any one of the preceding claims, including:
- a module (58) for initializing specifications of a mission including at least a geographical point of origin (18), a geographical destination point (20), and operational mission specifications;
- a module for recovering (60) a weather context, in particular an evolutive weather context, in a mission volume extending between the geographical point of origin (18) and the geographical destination point (20);
- a module (62) for determining airplane performance, capable of determining airplane performance based on operational mission specifications and the weather context.

12. The system (10) according to any one of the preceding claims, wherein the or each operational specification includes an airplane context, in particular a type of defective equipment, a dispatch or a failure, and/or includes a mission context, in particular a weather zone to avoid, a prohibited zone (24) or a desired passage zone (32).

13. A method for calculating a mission of an aircraft, using a mission calculating system (10) including an engine (40) for calculating paths of the aircraft during the mission, the method including the following steps:
- calculating, via a first path calculating module (64) of the calculating engine (40), a first optimal mission path (64A) between a geographical point of origin (18) and a geographical destination point (20) as a function of airplane performance, operational mission specifications and a weather context, preferably evolutive, in a mission space between the geographical point of origin (18) and the geographical destination point (20), the calculation of the optimal mission path (64A) being done in a manner non constrained by a network of waypoints (53A) and/or imposed paths (53B) between the waypoints (53A), the first path calculating module calculating the optimal mission path as if the aircraft was able to perform a free flight taking account of mission specifications, without accounting for a network of waypoints and/or imposed paths between the waypoints;
- defining, via a definition module (63) of the calculating engine (40), an optimization region of the path (63A) around the first optimal mission path (64A); and
- calculating, via a second path calculating module (65), an optimized path (65A) of the aircraft in the optimization region (63A) in a manner constrained by a network of waypoints (53A) and/or imposed paths (53B) between the waypoints (53A), taking the weather context into account.

14. The method according to claim 13, wherein the optimization region (63A) of the path is defined as a function of a predetermined lateral distance from each point of the optimal path (64) and as a function of the operational mission specifications.

15. The method according to any one of claims 13 to 14, wherein the calculation of the optimized path (65A) includes defining, in the optimization region, a network of nodes (96) between the geographical point of origin (18) and the geographical destination point (20) from the network of waypoints (53A) and/or imposed paths (53B) between the waypoints (53A), defining a cost associated with the passage from one node (96) to an adjacent node (96) among the nodes (96) of the network and determining the optimized path (65A) based on a minimization of the total cumulative cost between the geographical point of origin (18) and the geographical destination point (20).
